# EUROPÄISCHE PATENTSCHRIFT

(11) **EP 3 105 092 B1**
(45) Veröffentlichungstag und Bekanntmachung des Hinweises auf die Patenterteilung: **30.08.2017**
(21) Anmeldenummer: 14815584.9
(22) Anmeldetag: 17.12.2014
(51) Int. Cl.: B60W 30/095, B60W 30/10, B60W 30/14, B60W 30/16

(54) **VERFAHREN ZUM BETRIEB EINES ZUR WENIGSTENS TEILWEISE AUTOMATISCHEN FAHRZEUGFÜHRUNG AUSGEBILDETEN FAHRZEUGSYSTEMS UND KRAFTFAHRZEUG**
METHOD FOR OPERATING A VEHICLE SYSTEM DESIGNED TO PERFORM AT LEAST PARTIALLY AUTOMATIC VEHICLE GUIDANCE, AND MOTOR VEHICLE
PROCÉDÉ D'UTILISATION D'UN SYSTÈME DE VÉHICULE CONÇU POUR LA CONDUITE AU MOINS PARTIELLEMENT AUTOMATIQUE D'UN VÉHICULE ET VÉHICULE AUTOMOBILE

(30) Priorität: 15.02.2014 DE 102014002114
(43) Veröffentlichungstag der Anmeldung: 21.12.2016
(73) Patentinhaber: Audi AG, 85045 Ingolstadt (DE)
(72) Erfinder: BOUZOURAA, Mohamed Essayed, 85051 Ingolstadt (DE); WEIHERER, Tobias, 85057 Ingolstadt (DE); HOFMANN, Ulrich, 85049 Ingolstadt (DE)
(74) Vertreter: Herbst, Matthias Heinz
(86) Internationale Anmeldenummer: PCT/EP2014/003401
(87) Internationale Veröffentlichungsnummer: WO 2015/120874

(56) Entgegenhaltungen:
- EP-A1- 2 251 240
- EP-A1- 2 404 804
- WO-A1-2012/091637
- DE-A1-102008 036 131
- TOBIAS WEIHERER ET AL: "A generic map based environment representation for driver assistance systems applied to detect convoy tracks", INTELLIGENT TRANSPORTATION SYSTEMS (ITSC), 2012 15TH INTERNATIONAL IEEE CONFERENCE ON, IEEE, 16. September 2012 (2012-09-16), Seiten 691-696, XP032263990, DOI: 10.1109/ITSC.2012.6338658 ISBN: 978-1-4673-3064-0

## Beschreibung

Die Erfindung betrifft ein Verfahren zum Betrieb eines zur wenigstens teilweise automatischen Fahrzeugführung ausgebildeten Fahrzeugsystems, wobei wenigstens ein Längsführungseingriff und/oder wenigstens ein Querführungseingriff unter Berücksichtigung von die Umgebung des Kraftfahrzeugs beschreibenden Umfelddaten des Kraftfahrzeugs ermittelt werden. Daneben betrifft die Erfindung ein Kraftfahrzeug.

Im Stand der Technik sind bereits Fahrerassistenzsysteme und sonstige Fahrzeugsysteme bekannt, die zur wenigstens teilweise automatischen Fahrzeugführung ausgebildet sind. Derartige Fahrzeugsysteme werden auch als teilautonome beziehungsweise vollautonome Fahrzeugsysteme bezeichnet. Sie übernehmen wenigstens teilweise die Längs- und/oder Querführung des Kraftfahrzeugs innerhalb gewisser Funktionsgrenzen (Systemgrenzen). Um eine sinnvolle Fahrzeugführung zu ermöglichen, werden die Längs- und/oder Querführungseingriffe in Abhängigkeit von die Umgebung des Kraftfahrzeugs beschreibenden Umfelddaten ermittelt, die meist von Umfeldsensoren des Kraftfahrzeugs herrühren. So können beispielsweise Fahrspurmarkierungen und dynamische Objekte in der Umgebung des Kraftfahrzeugs detektiert werden.

Bekannte Beispiele für derartige Fahrzeugsysteme umfassen zum einen längsführende Fahrerassistenzsysteme, beispielsweise ACC-Systeme (ACC = Adaptive Cruise Control). Darin wird, falls kein dicht genug voranfahrendes Fahrzeug vorliegt, auf eine Wunschgeschwindigkeit geregelt, ansonsten auf einen definierten Abstand, beispielsweise eine Wunschzeitlücke, zu dem voranfahrenden Fahrzeug als Folgeobjekt. Auch bei anderen längsführenden Fahrzeugsystemen werden häufig unmittelbar voranfahrende Fahrzeuge als sogenannte Folgeobjekte bestimmt, so dass deren Position und Dynamikgrößen, insbesondere die Geschwindigkeit und/oder die Beschleunigung, als Eingangsgrößen für die Funktion verwendet werden.

Bekannte querregelnde Fahrzeugsysteme umfassen beispielsweise Spurhaltesysteme (LKS - Lane Keeping System) und Spurwechselassistenten, die zur automatischen Durchführung eines Spurwechsels ausgebildet sind. Die Ermittlung der Querführungseingriffe basiert dabei meist auf erkannten Fahrspurmarkierungen und/oder ebenfalls auf der Position eines erkannten Folgeobjekts, insbesondere des unmittelbar voranfahrenden Fahrzeugs.

Schließlich wurden auch bereits Fahrzeugsysteme vorgeschlagen, die innerhalb bestimmter Systemgrenzen sowohl die Längs- als auch die Querführung des Kraftfahrzeugs übernehmen können. Ein Beispiel für ein solches Fahrzeugsystem ist ein Stau-Fahrerassistenzsystem, welches innerhalb eines Staus die Fahrzeugführung vollständig übernehmen kann. Auch diesbezüglich wird üblicherweise auf erkannte Fahrspurmarkierungen und/oder Folgeobjekte zurückgegriffen.

Mithin basiert in den bekannten, genannten Verfahren zum Betrieb der Fahrzeugsysteme die Längsregelung einzig auf dem Verhalten des Folgeobjekts, insbesondere des unmittelbar voranfahrenden Fahrzeugs. Zeigt beispielsweise das Folgeobjekt trotz kontinuierlichen Verkehrsflusses ein unkomfortables Brems-Beschleunigungsverhalten, folgt das eigene Kraftfahrzeug dem Verhalten des Folgeobjekts, obwohl dies angesichts der komfortableren kollektiven Verkehrsbewegung nicht zwangsläufig nötig wäre. Basiert die Querregelung des Kraftfahrzeugs ebenfalls ausschließlich auf der Position des Folgeobjekts, so ist das Fahrzeugsystem vollständig auf ein sinnvolles Verkehrsverhalten des Folgeobjekts angewiesen. Verfolgt das Folgeobjekt ein anderes Fahrziel, z. B. beim Abfahren einer Autobahn, muss das Fahrzeugsystem dieses Verhalten gezielt erkennen.

Bei einer Realisierung der Querführung auf Basis von erkannten Fahrspurmarkierungen ist das Fahrzeugsystem auf die Existenz und die fehlerfreie Erkennung der Fahrspurmarkierungen durch Umfeldsensoren, insbesondere Kameras, angewiesen. Darüber hinaus müssen die durch Fahrspurmarkierungen gekennzeichneten Fahrspuren nicht zwangsläufig den tatsächlich gefahrenen Trajektorien der Verkehrsteilnehmer entsprechen, beispielsweise in Fahrsituationen, in denen Fahrzeugkolonnen um eine Gefahrenstelle ausweichen.

EP 2 251 240 A1 betrifft ein Verfahren zur automatischen Längsführung eines Kraftfahrzeugs umfassend ein adaptives Längsführungssystem (ACC-System). Dabei wird zur Verbesserung der Längsführung nicht nur das Verhalten - Abstand, Geschwindigkeit und Beschleunigung - des unmittelbar vorausfahrenden Fahrzeugs, sondern mehrerer vorausfahrender Fahrzeuge berücksichtigt. Es soll ein vorausschauendes Kolonnenverhalten ermittelt werden.

Der Erfindung liegt daher die Aufgabe zugrunde, ein Verfahren zum Betrieb eines wenigstens teilautonomen Fahrzeugsystems anzugeben, welches durch Berücksichtigung zusätzlicher Informationen eine robustere und insbesondere komfortablere automatische Längs- und/oder Querführung des Kraftfahrzeugs erlaubt.

Zur Lösung dieser Aufgabe sind bei einem Verfahren der eingangs genannten Art erfindungsgemäß die Merkmale des Anspruchs 1 vorgesehen.

Die Erfindung schlägt mithin vor, der wenigstens teilweise automatisierten Fahrzeugführung das kollektive Verkehrsverhalten zugrunde zulegen oder dieses wenigstens zu berücksichtigen. Mithin ist es die Grundidee, die automatisierte Längs- und/oder Querführung eines Kraftfahrzeugs aufgrund von Kollektivgrößen erkannter Verkehrskolonnen zu realisieren. Es wurde erkannt, dass aus den Umfelddaten über Kolonnen in der Umgebung des eigenen Kraftfahrzeugs, insbesondere der dem Kraftfahrzeug vorausfahrenden Kolonne, verschiedene Kolonnendaten extrahiert werden können, die geeignet sind, als Grundlage der Längs- und/oder Querführung eingesetzt zu werden oder diese zumindest vorteilhaft zu beeinflussen.

Damit ergibt sich gegenüber Längsführungs- und Querführungsfunktionen, die nur auf dem Verhalten eines einzelnen Folgeobjekts, insbesondere des unmittelbar voranfahrenden Fahrzeugs, basieren, eine höhere Robustheit gegenüber Abweichungen vom erwarteten Fahrbetrieb, wie sie bei Einzelfahrzeugen auftreten können, beispielsweise Fahrfehlern und dergleichen. Es kann insgesamt vorausschauender agiert werden, da auch weiter vorausliegende Informationen in der Kolonneninformation enthalten sind.

Zweckmäßigerweise kann dabei vorgesehen sein, dass zu einer gemeinsamen Kolonne gehörende Fahrzeuge anhand eines Vergleichs ihrer Positionsverläufe identifiziert werden. Das bedeutet, durch einen Vergleich ihrer in der Historie überfahrenen Bereiche können Fahrzeuge, meist in den Umfelddaten als Objekte repräsentiert, gemeinsamen Kolonnen zugeordnet werden, so dass dem Fahrzeug vorausfahrende Kolonnen genauso identifiziert werden können, wie Kolonnen auf Nachbarspuren. Dabei sei an dieser Stelle bereits darauf hingewiesen, dass es selbstverständlich denkbar ist, bei der Ermittlung der Kolonneninformation bereits einzelne Fahrzeuge zu erkennen, die sich nicht kolonnenkonform verhalten, beispielsweise also Spurwechsler, welche zur Ermittlung der Kolonneninformation der Betrachtung zumindest teilweise entzogen werden können, so dass ihr Einfluss auf die Kolonnenbildung minimiert werden kann.

Dabei sei an dieser Stelle angemerkt, dass die Kolonneninformation auch zusätzlich zu auf ein unmittelbar vorausfahrendes Fahrzeug oder allgemein ein Folgeobjekt bezogenen Fahrzeuginformationen zur Ermittlung der Querführungs- und/oder Längsführungseingriffe berücksichtigt werden kann. Es ist mithin möglich, dass neben der Kolonneninformation auch eine auf ein unmittelbar vorausfahrendes Fahrzeug bezogene Fahrzeuginformation bei der Ermittlung des wenigstens einen Querführungseingriffs und/oder des wenigstens einen Längsführungseingriffs berücksichtigt wird. So sind Ausführungsbeispiele denkbar, bei denen die Kolonneninformation die Basis für die entsprechenden Regelungen bietet, die über die Fahrzeuginformation noch geeignet modifiziert wird; es ist jedoch auch der umgekehrte Fall denkbar, in dem vom Verhalten des unmittelbar voranfahrenden Fahrzeugs ausgegangen wird, um Modifikationen anhand der Kolonneninformation vorzunehmen.

Eine bevorzugte Ausgestaltung der Erfindung sieht vor, dass als Kolonneninformation ein zukünftiger Fahrspurverlauf aus einem zeitlichen Verlauf der Positionen der Fahrzeuge der Kolonnen ermittelt wird. Dabei werden selbstverständlich ortsfeste Positionen betrachtet, das bedeutet, es lässt sich aus den Umfelddaten, die beispielsweise die Position und die Geschwindigkeit eines Fahrzeugs beschreiben können, schlussfolgern, welche Bahn dieses Fahrzeug genommen hat. Nachdem im Fall einer Kolonne Informationen von mehreren Fahrzeugen vorliegen, können deren historische Bewegungen mithin verkettet werden, so dass sich insgesamt eine Information über den Fahrspurverlauf ergibt, die auch als "Kolonnenspur" bezeichnet werden kann.

Zweckmäßigerweise können dann, wenn zu einem Abschnitt des Fahrspurverlaufs Positionen mehrerer Fahrzeuge der Kolonne vorliegen, diese gegeneinander plausibilisiert werden und/oder statistisch zu einem gemeinsamen Positionsverlauf verarbeitet werden. Ein besonderer Vorteil der Betrachtung einer Kolonne ist, dass die Kraftfahrzeuge wenigstens im Wesentlichen den selben Weg zurücklegen, so dass dann, wenn zu einem Abschnitt des Fahrspurverlaufs Positionen mehrerer Fahrzeuge vorliegen, diese miteinander abgeglichen werden, wobei beispielsweise eine maximal zulässige Abweichung definierende Schwellwerte verwendet werden können, um die Plausibilität zu überprüfen. Ist keine Plausibilität gegeben, können Positionen wenigstens eines Fahrzeugs wenigstens teilweise auch verworfen werden. Liegt eine statistische Kombination von Positionen zu einem gemeinsamen Positionsverlauf vor, kann dieser auch unmittelbar als Fahrspurverlauf für den Abschnitt verwendet werden.

Konkret kann vorgesehen sein, dass bei zu stark voneinander abweichenden Positionen unterschiedlicher Fahrzeuge in dem Abschnitt die neuesten aufgenommenen Positionen und/oder bei mehr als zwei Fahrzeugen der von den meisten Fahrzeugen gewählte Positionsverlauf für die Bestimmung des Fahrspurverlaufs verwendet werden. Nehmen mithin zwei Fahrzeuge der Kolonne gänzlich unterschiedliche Wege innerhalb des Abschnitts, können die neuesten vorliegenden Positionen als zutreffend angenommen werden, falls nicht, was bei drei oder mehr Fahrzeugen überprüft werden kann, eine Majorität der Fahrzeuge einen anderen Weg bevorzugt. Dann kann der bevorzugte Weg berücksichtigt werden. Die hier beschriebenen Kriterien, die letztlich das Ergebnis der Plausibilitätsprüfung bilden, mithin bei einer wenigstens einen Schwellwert überschreitenden Abweichung von Positionen gegeben sind, können selbstverständlich auch um weitere Kriterien ergänzt werden. So kann beispielsweise ermittelt werden, wie bereits erwähnt wurde, dass ein Fahrzeug aus der Kolonne einen Spurwechsel vornimmt, was aus einer Analyse der Positionsdaten dieses Kraftfahrzeugs festgestellt werden kann, so dass dieses Fahrzeug zumindest ab dem Spurwechsel als nicht mehr der Kolonne zugehörig betrachtet werden kann und entsprechend auch seine Positionen wenigstens ab dem Zeitpunkt des Spurwechsels nicht mehr in die Bestimmung des Fahrspurverlaufs eingehen.

Eine bevorzugte Weiterbildung der Erfindung sieht nun vor, dass der Fahrspurverlauf als Solltrajektorie bei der Ermittlung wenigstens eines Querführungseingriffes verwendet wird. Mithin sieht eine Ausgestaltung der Erfindung vor, dass die Kolonnenspur der Kolonne vor dem eigenen Kraftfahrzeug als Sollposition in einem Regler verwendet werden kann. Wird eine solche aus dem Fahrspurverlauf folgende Solltrajektorie als Basis der Querregelung verwendet, lässt sich eine automatisierte Querführung des Kraftfahrzeugs auch auf Straßen realisieren, auf denen keine Fahrspurmarkierungen vorhanden sind beziehungsweise allgemein ein Umfeldsensor nicht in der Lage ist, die vorhandenen Fahrspurmarkierungen und den Fahrspurverlauf zu detektieren. Auch in Fahrsituationen, in denen sich der Verkehrsfluss nicht an Fahrspurmarkierungen orientiert, kann die Kolonneninformation, konkret der Fahrspurverlauf, die Möglichkeit bieten, eine Querführungsfunktion zur Verfügung zu stellen. Derartiges tritt beispielsweise auf, wenn sämtliche vorausfahrende Fahrzeuge ein Hindernis, beispielsweise ein Unfallfahrzeug, umfahren, und daher von erkennbaren Fahrspurmarkierungen gegebenenfalls abweichen. Dies zeigt auf, dass es allgemein zweckmäßig ist, wenn die Querregelung ausgehend von einer durch den Fahrspurverlauf definierten Solltrajektorie erfolgt, da hier das tatsächliche Fahrverhalten voranfahrender Fahrzeuge in der selben Fahrspur betrachtet wird. Dabei sei darauf hingewiesen, dass der Fahrspurverlauf als Solltrajektorie durchaus noch durch weitere Einflussgrößen auf die Querregelung modifiziert werden kann, beispielsweise dann, wenn auch Fahrzeuginformationen über ein unmittelbar voranfahrendes Fahrzeug und dergleichen berücksichtigt werden.

Eine weitere Ausgestaltung der vorliegenden Erfindung sieht vor, dass zu dem Fahrspurverlauf aufgrund einer angenommenen und/oder in den Umfelddaten enthaltenen Breite der Fahrzeuge der Kolonne ein erlaubter Fahrkorridor ermittelt wird. Ein derartiger Fahrkorridor ist definiert durch Begrenzungen zu jeder Seite des Fahrspurverlaufs. Er gibt letztlich wieder, wo innerhalb der Kolonne Fahrzeuge gefahren sind beziehungsweise wie groß der Spielraum um den Fahrspurverlauf bislang war, weswegen es auch denkbar ist, den Fahrkorridor in Abhängigkeit einer Standardabweichung oder einer sonstigen statistischen Schwankung der Positionswerte um den Fahrspurverlauf zu ermitteln. Eine andere Ausgestaltung sieht vor, dass der Fahrkorridor aus den Positionsverläufen und Breiten aller einzelner Fahrzeuge ermittelt wird, wobei immer die am weitesten außen liegende Randposition der Randpositionen aller Fahrzeuge als Begrenzung des Fahrkorridors bestimmt wird. In jedem Fall ist eine Annahme oder Kenntnis der Breite der Fahrzeuge der Kolonne notwendig, wobei beispielsweise eine allgemeine Annahme zur Breite von Fahrzeugen eingesetzt werden kann, oder was selbstverständlich jedoch auch denkbar ist, sich die Breite anderer Fahrzeuge aus den Umfelddaten ableiten lässt.

Im Rahmen der vorliegenden Erfindung werden zwei Ausgestaltungen zur Nutzung des Fahrkorridors vorgeschlagen. So kann zum einen vorgesehen sein, dass die Begrenzungen des Fahrkorridors als Grenzen möglicher Querpositionen des eigenen Kraftfahrzeugs bei der Ermittlung des wenigstens einen Querführungseingriffs verwendet werden. Die Begrenzungen des Fahrkorridors geben also an, wie weit seitlich ein Querführungseingriff führen kann. Auf diese Weise wird letztlich der selbe Spielraum genutzt, der schon den anderen, voranfahrenden Fahrzeugen auf der selben Fahrspur offensichtlich zur Verfügung stand, was durch die Ermittlung des Fahrkorridors aus den diese Fahrzeuge betreffenden Umfelddaten hervorgeht. Mithin wirken die Begrenzungen der Fahrkorridore als eine Art Randbedingungen.

Eine andere Ausgestaltung der vorliegenden Erfindung sieht vor, dass eine Kolonneninformation und ein Fahrkorridor auch für wenigstens eine der aktuellen Fahrspur des Kraftfahrzeugs benachbarte Fahrspur ermittelt werden, wobei die nächstgelegenen Begrenzungen der Fahrkorridore der benachbarten Fahrspuren als Grenzen möglicher Querpositionen des eigenen Kraftfahrzeugs bei der Ermittlung des wenigstens einen Querführungseingriffs verwendet werden. Auf diese Weise werden also zusätzlich zur Fahrspur des eigenen Kraftfahrzeugs auch Kolonneninformationen über benachbarte Fahrspuren, soweit vorhanden, erstellt, so dass eine weniger enge Begrenzung des Bereichs, in den Querführungseingriffe folgen können, geschlussfolgert werden kann, nachdem nicht in die Fahrkorridore der benachbarten Kolonnen eingedrungen werden soll. Es ist auch ein Ausführungsbeispiel denkbar, in dem sowohl die Begrenzungen des Fahrkorridors der eigenen Fahrspur als auch die Begrenzungen der Fahrkorridore benachbarter Fahrspuren eingesetzt werden, wobei zunächst in dem Bereich zwischen den Begrenzungen des eigenen Fahrkorridors und den Begrenzungen der benachbarten Fahrspur-Korridore eine Gewichtung gegen eine Querposition, die in diesen Bereich hineinragt, vorgesehen wird, ein Eindringen des eigenen Kraftfahrzeugs in die benachbarten Fahrkorridore jedoch vollständig vermieden wird.

Bezüglich der Längsführung sieht die vorliegende Erfindung vor, dass ein ortsbezogenes Geschwindigkeitsprofil und/oder ein ortsbezogenes Beschleunigungsprofil entlang der Kolonne ermittelt wird, welches entlang eines ermittelten Fahrspurverlaufs oder anhand eines Abstands zum eigenen Kraftfahrzeug parametrisiert ist, wobei der Geschwindigkeitsverlauf beziehungsweise der Beschleunigungsverlauf aus den Geschwindigkeiten beziehungsweise Beschleunigungen der Fahrzeuge der Kolonne an den Positionen des Fahrspurverlaufs und/oder bei den einzelnen Abständen ermittelt wird. Während es im Rahmen der vorliegenden Erfindung bevorzugt und im Fall einer Längs- und Querregelung durch das Fahrzeugsystem auch zweckmäßig ist, einen Fahrspurverlauf und diesem zugeordnet einen Geschwindigkeitsverlauf und/oder einen Beschleunigungsverlauf zu bestimmen, ist es insbesondere bei Fahrzeugsystemen, die nur mit der Längsführung des Kraftfahrzeugs beschäftigt sind, auch denkbar, den Ortsbezug des Geschwindigkeits- und/oder Beschleunigungsverlaufs innerhalb der Kolonne über Abstände zum eigenen Kraftfahrzeug zu parametrisieren, so dass dann eine Ermittlung des Fahrspurverlaufs nicht zwangsläufig notwendig ist, wohl aber zweckmäßig sein kann, nachdem der Fahrspurverlauf auch für andere Fahrzeugsysteme eine nützliche Information darstellen kann.

Das Geschwindigkeitsprofil und/oder das Beschleunigungsprofil werden bevorzugt bei der Ermittlung des wenigstens einen Längsführungseingriffs berücksichtigt, insbesondere zusätzlich zu berücksichtigten Zustandsgrößen eines Folgeobjekts und/oder im Rahmen einer vorausschauenden Regelung. Dabei sind Ausführungsbeispiele denkbar, in denen das Geschwindigkeitsprofil und/oder das Beschleunigungsprofil grundsätzliche Sollwerte für die Geschwindigkeit und/oder Beschleunigung des Kraftfahrzeugs an den entsprechenden Orten darstellt, mithin die Regelungsbasis bietet, möglich ist es jedoch auch, dass eine andere Datenquelle, beispielsweise Fahrzeuginformationen zu einem unmittelbar vorausfahrenden Fahrzeug, die Regelungsbasis bieten, welche über das Geschwindigkeitsprofil und/oder das Beschleunigungsprofil modifiziert werden. Bevorzugt ist jedoch der erstgenannte Fall, in dem ein Sollgeschwindigkeitsverlauf und/oder ein Sollbeschleunigungsverlauf, von dem bei der Ermittlung der Längsführungseingriffe ausgegangen wird, aus dem Geschwindigkeitsprofil und/oder dem Beschleunigungsprofil ermittelt wird, insbesondere als das Geschwindigkeitsprofil und/oder das Beschleunigungsprofil gewählt wird. Denn letztlich beschreibt das Geschwindigkeitsprofil und/oder das Beschleunigungsprofil entlang der Kolonne den Langzeittrend, so dass die Voraussage möglich ist, an welchen Orten voraussichtlich gebremst und/oder beschleunigt werden muss, nachdem alle voranfahrenden Fahrzeuge der Kolonne dies eben so getan haben. Selbstverständlich kann von einem solchen Soligeschwindigkeitsverlauf und/oder Sollbeschleunigungsverlauf auch abgewichen werden, mithin eine Modifikation erfolgen, beispielsweise wenn Fahrzeuginformationen des Folgeobjekts, insbesondere des unmittelbar voranfahrenden Fahrzeugs, anzeigen, dass diese plötzlich abweichend vom Geschwindigkeitsprofil und/oder Beschleunigungsprofil bremst, da dann auf eine Gefährdungssituation geschlossen werden kann und entsprechend auch ein Bremsvorgang im eigenen Kraftfahrzeug eingeleitet werden kann, abweichend von dem Geschwindigkeitsprofil und/oder Beschleunigungsprofil der Kolonneninformation.

Der besondere Vorteil der zusätzlichen Nutzung solcher statistisch ermittelten Geschwindigkeitsprofile und/oder Beschleunigungsprofile ist, dass die Längsführung des Kraftfahrzeugs nicht mehr nur vom Folgeobjekt, insbesondere dem unmittelbar voranfahrenden Fahrzeug, abhängig ist, so dass sie komfortabler und vorausfahrender gestaltet werden kann. Besonders vorteilhaft ist eine solche vorausschauende Längsführung beim Anfahren und Anhalten. Denn hierbei handelt es sich meist um Trends, die im Kolonnenverlauf bereits absehbar sind.

Eine besonders vorteilhafte Ausgestaltung der vorliegenden Erfindung sieht vor, dass die Kolonneninformation ein aus der Kolonne ausscherendes und/oder ein in die Kolonne einscherendes Fahrzeug beschreibende Spurwechslerdaten umfasst, die bei der Ermittlung des wenigstens einen Längsführungseingriffs berücksichtigt werden. Ausscherende Fahrzeuge bei einer Kolonne deuten auf einen entstehenden Freiraum hin, der häufig für Beschleunigungsphasen genutzt wird, so dass bei einem ausscherenden Kraftfahrzeug, gegebenenfalls zeitversetzt, ein Beschleunigen des eigenen Kraftfahrzeugs in Betracht gezogen wird. Der entgegengesetzte Fall liegt vor, wenn ein Fahrzeug in die Kolonne einschert. Dann werden die zur Verfügung stehenden Räume meist kleiner, so dass mit Bremsmanövern der vorausfahrenden Fahrzeuge in der Kolonne gerechnet werden kann, mithin gegebenenfalls zeitversetzt auch im eigenen Kraftfahrzeug Verzögerungsmanöver eingeleitet werden können. Mithin bietet die Analyse im Hinblick auf Spurwechsler eine weitere nützliche Information, um die Vorausschaufähigkeit und Komfortabilität der Längsführung zu erhöhen.

Zur konkreten Ermittlung der Kolonneninformation kann zweckmäßigerweise vorgesehen sein, dass die Kolonneninformation unter Verwendung eines detektierte Objekte in der Umgebung des Kraftfahrzeugs mit zugeordneten Attributen umfassenden Umfeldmodells ermittelt wird. Derartige Umfeldmodelle, die im Stand der Technik grundsätzlich bekannt sind, fassen die Umfelddaten in einer kompakten Repräsentation zusammen, so dass mithin von diesen vorverarbeiteten Umfelddaten ausgegangen werden kann, um die Kolonneninformation zu ermitteln. Insbesondere dann, wenn die in der Umgebung des eigenen Kraftfahrzeugs vorliegenden Fahrzeuge bereits als Objekte mit zugeordneter Position, Geschwindigkeit und Beschleunigung sowie den entsprechenden historischen Daten vorliegen, ergibt sich eine einfache Ableitung der Kolonneninformation aus den Umfelddaten im Umfeldmodell.

Eine weitere zweckmäßige Ausgestaltung der vorliegenden Erfindung sieht vor, dass die Umfelddaten wenigstens teilweise Sensordaten wenigstens eines in Fahrtrichtung des Kraftfahrzeugs ausgerichteten Radarsensors des Kraftfahrzeugs umfassen, welcher zur Erfassung von durch ein unmittelbar voranfahrendes Fahrzeug verdeckten weiteren voranfahrenden Fahrzeugen angeordnet ist. Als Umfeldsensoren können mithin bevorzugt Radarsensoren verwendet werden, wobei das Verfahren von der Fähigkeit der Radarsensoren profitiert, auch verdeckte vorausfahrende Fahrzeuge zu detektieren. Untersuchungen haben gezeigt, dass es bestimmte Anordnungen von Radarsensoren hervorragend erlauben, auch dem unmittelbar vorausfahrenden Fahrzeug vorausfahrende Fahrzeuge zu erfassen. Werden beispielsweise bei einer Frequenz von 77 GHz arbeitende Radarsensoren verwendet, konnte gezeigt werden, dass durch die Mehrfachreflektionen am Boden Fahrzeuge detektiert werden können, auf die die Sicht grundsätzlich verdeckt ist. In bislang bekannten Systemen werden derartige Sensordaten verworfen, nicht jedoch nicht im erfindungsgemäßen Verfahren, nachdem der Radarsensor so optimiert ist, dass eine voranfahrende Kolonne hierdurch vermessen werden kann. Vorteilhaft hierbei ist auch, dass Radarsensoren in vielen modernen Kraftfahrzeugen ohnehin verbaut sind, mithin bereits vorhandene Umfeldsensoren des Kraftfahrzeugs genutzt werden können, die bei verschiedenen Fahrerassistenzsystemen eingesetzt werden können. Somit entstehen keine zusätzlichen Kosten durch zusätzliche Umfeldsensoren.

In bevorzugter Ausgestaltung der Erfindung kann vorgesehen sein, dass die Anordnung des Radarsensors in einem Optimierungsverfahren derart gewählt wird, dass er möglichst tief an der Karosserie unter Einhaltung einer maximal zulässigen Störung durch Nahbereichsbodenreflexion angeordnet ist. Eine Anordnung möglichst dicht am Boden ermöglicht es umso besser, durch Reflexionen am Boden unmittelbar vorausfahrende Kraftfahrzeuge zu umgehen und mithin Daten weiter vorausfahrender Fahrzeuge zu erhalten, wobei eine derartige Anordnungsstrategie jedoch an Grenzen stößt, wenn im Nahbereich des Radarsensors entstehende Reflexionen zu starke Störungen verursachen würden. Untersuchungen der Anmelderin haben gezeigt, dass eine Art Wendepunkt existiert, an dem eine Störung durch Nahbereichsreflexionen wieder stärker wird, mithin in einem Optimierungsverfahren ein optimales Intervall oder gar ein optimaler Punkt, nämlich dieser Wendepunkt, ermittelt werden kann, an dem Radarsensoren angeordnet sein sollten, um optimal dem eigenen Kraftfahrzeug vorausfahrende Kolonnen detektieren zu können.

Es ist im Rahmen der vorliegenden Erfindung auch denkbar, dass die Kolonneninformation ausschließlich aus von mit Umfeldsensoren des Kraftfahrzeugs aufgenommenen Sensordaten, insbesondere ausschließlich aus Sensordaten des wenigstens einen Radarsensors, ermittelt wird. Es ist also möglich, die Kolonneninformation allein durch Auswertung von Sensordaten der fahrzeugeigenen Umfeldsensorik zu erhalten, wobei es in Ausgestaltungen möglich ist, beispielsweise auch Sensordaten von Lasersensoren und/oder Kameras zu berücksichtigen. Im Übrigen können auch den Betriebszustand des Kraftfahrzeugs beschreibende Egodaten, die beispielsweise aus einer Eigenbewegungssensorik, insbesondere Inertialsensorik, gewonnen werden können, berücksichtigt werden. Es sind jedoch auch Ausgestaltungen denkbar, in denen allein die Nutzung von Radarsensoren bereits ausreichend ist, um eine hinreichend genaue Kolonneninformation zu ermitteln.

Es sei an dieser Stelle auch angemerkt, dass das erfindungsgemäße Verfahren selbstverständlich auch auf Fälle erweitert werden kann, in denen dem eigenen Kraftfahrzeug nur ein einziges Fahrzeug voranfährt, wobei dann beispielsweise dessen Fahrzeuginformationen als hauptsächlich relevant für die Längs- und/oder Querführung angesehen werden kann.

Neben dem Verfahren betrifft die vorliegende Erfindung auch ein Kraftfahrzeug, umfassend ein zur wenigstens teilweise automatischen Fahrzeugführung ausgebildetes Fahrzeugsystem mit einem zur Durchführung des erfindungsgemäßen Verfahrens ausgebildeten Steuergeräts. Sämtliche Ausführungen bezüglich des erfindungsgemäßen Verfahrens lassen sich analog auf das erfindungsgemäße Kraftfahrzeug übertragen, mit welchen mithin die bereits genannten Vorteile ebenso erzielt werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: einen Ablaufplan des erfindungsgemäßen Verfahrens,
- Fig. 2: eine Skizze zur Ermittlung eines Fahrspurverlaufs der Kolonneninformation,
- Fig. 3: eine Skizze zu Fahrkorridoren, und
- Fig. 4: eine Prinzipskizze eines erfindungsgemäßen Kraftfahrzeugs.

Im Folgenden sollen Ausführungsbeispiele zum Betrieb eines zur wenigstens teilweise automatischen Fahrzeugführung ausgebildeten Fahrzeugsystems eines Kraftfahrzeugs dargestellt werden, wobei sich die konkreten Ausführungen auf ein Fahrzeugsystem beziehen, das innerhalb bestimmter Systemgrenzen sowohl zur automatischen Längsführung als auch zur automatischen Querführung des Kraftfahrzeugs ausgebildet ist, beispielsweise ein Stau-Fahrerassistenzsystem.

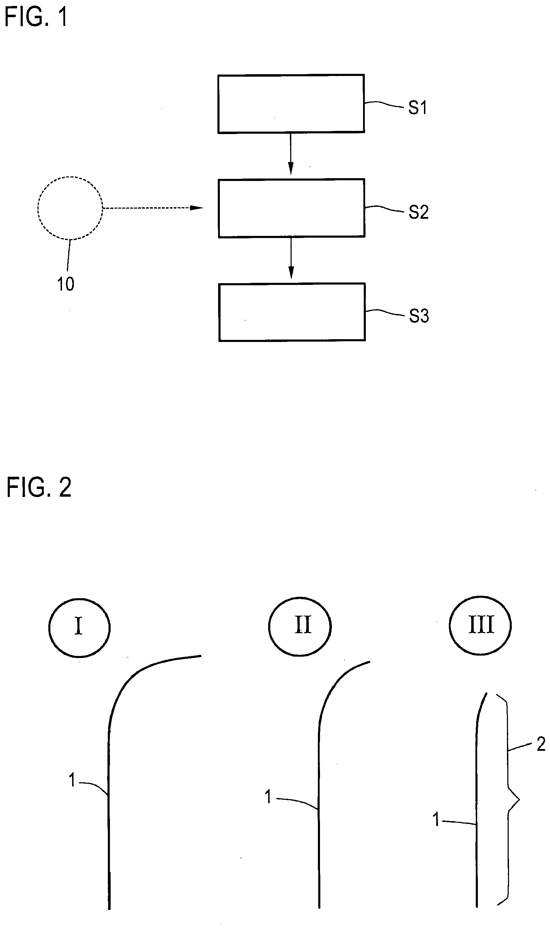

Fig. 1 zeigt einen Ablaufplan eines Ausführungsbeispiels des erfindungsgemäßen Verfahrens. Demnach wird zunächst in einem Schritt S1 eine Kolonneninformation ermittelt. Um dies zu erreichen, werden zunächst die in der Umgebung des eigenen Kraftfahrzeugs detektierten Fahrzeuge Kolonnen zugeordnet, nämlich einer Kolonne für die vom Kraftfahrzeug selbst befahrene Fahrspur und gegebenenfalls, falls vorhanden, Kolonnen für die dem Kraftfahrzeug benachbarten Fahrspuren. Grundlage der Kolonneninformationen für verschiedene Fahrspuren sind Umfelddaten, wobei ein Ausführungsbeispiel vorsehen kann, dass als Umfelddaten allein Sensordaten des eigenen Kraftfahrzeugs verwendet werden, wobei als Umfeldsensor bevorzugt wenigstens ein Radarsensor vorgesehen ist.

Die Umfelddaten sind bevorzugt bereits vorverarbeitet und liegen in einem Umfeldmodell vor, welches Objekte mit zugeordneten Attributen, hier beispielsweise der Position des Objekts, der Geschwindigkeit des Objekts und der Beschleunigung des Objekts sowie des zeitlichen Verlaufs dieser Größen, abgelegt sind. Zur Zuordnung von Fahrzeugen zu Kolonnen ist es mithin möglich, in groben Kriterien gleichverlaufende Positionsverläufe der Fahrzeuge festzustellen.

Sodann kann die Ermittlung der Kolonneninformation erfolgen, wobei zunächst ein Fahrspurverlauf nach Art einer Kolonnenspur bestimmt werden soll. In Fig. 2 sind unter I, II und III Positionsverläufe 1 aufeinanderfolgender Fahrzeuge der Kolonne gezeigt. Ersichtlich haben die Fahrzeuge zum aktuellen Zeitpunkt bereits zu einem guten Teil den gleichen Weg zurückgelegt, der sich vorliegend durch den im Positionsverlauf 1 des Fahrzeugs III enthaltenen Anteil 2 ergibt. Für den Anteil 2 liegen also akkumulierte Positionsdaten sowie Geschwindigkeits- und Beschleunigungsdaten aller drei Fahrzeuge vor. Für die offensichtlich am Ende des Teils 2 beginnende Kurve liegen bis zum vordersten erfassten Fahrzeug, vgl. II hin zu I, immer weniger akkumulierte Daten vor, nämlich zunächst nur die Daten der Positionsverläufe 1 aus II und I, schließlich nur noch die Daten aus I.

Um hieraus einen Fahrspurverlauf nach Art einer Kolonnenspur zu bestimmen, werden zunächst die Positionsverläufe nach I, II und III gegeneinander in ihrer Plausibilität überprüft. Das bedeutet konkret, dass festgestellt wird, ob einer der Positionsverläufe 1 in Bereichen, in denen von mehreren Fahrzeugen Positionen vorliegen, zu stark von den anderen Verläufen 1 abweicht. Hierfür können geeignete Schwellwerte herangezogen werden. Vorliegend sind die Positionsverläufe 1 weitgehend gleich, so dass sie gegeneinander plausibilisiert sind. Statistische Verfahren ermöglichen es nun, in einem ortsfesten Koordinatensystem eine mittlere Bahn der Kolonne zu bestimmen, wobei jedem dieser Ortspunkte aufgrund der vorliegenden Geschwindigkeits- und Beschleunigungsinformation auch ein mittleres Geschwindigkeitsdatum und ein mittleres Beschleunigungsdatum zugeordnet werden kann, so dass die Kolonnenspurinformation neben dem Kolonnenverlauf mithin auch ein Geschwindigkeitsprofil und ein Beschleunigungsprofil enthält.

Sollte die Plausibilität nicht festgestellt werden, wird nach Kriterien entschieden, welche Positionsverläufe in die Ermittlung des Fahrspurverlaufs eingehen sollen. So kann ein Spurwechselkriterium vorgesehen sein, wenn der Positionsverlauf 1 eines Fahrzeugs einen Spurwechsel andeutet. Diese Information wird im Übrigen auch als Spurwechslerdaten in der Kolonneninformation abgespeichert. Dann ist das Fahrzeug zumindest ab dem Beginn des Spurwechsels nicht mehr Teil der Kolonne, seine folgenden Positionen werden verworfen, wenn nicht alle Fahrzeuge der Kolonne dieses Verhalten zeigen, beispielsweise eine Fahrspur also völlig blockiert ist. Ansonsten können Positionen verworfen werden, deren Verläufe nur bei einzelnen Fahrzeugen der Kolonne auftreten, während die Majorität der Fahrzeuge der Kolonne einen anderen Positionsverlauf 1 zeigt.

Die Ermittlung der Kolonneninformation wird fortgesetzt, indem für jede Kolonne ein Fahrkorridor um den Fahrspurverlauf ermittelt wird, der letztlich angibt, bis wohin seitlich bisher die Fahrzeuge der Kolonne gefahren sind. Der Fahrkorridor ist also eine Art Fahrschlauch, der von den Fahrzeugen der Kolonne definiert wurde. Hierfür werden Breiten der Fahrzeuge der Kolonne aus den Umfelddaten ermittelt oder angenommen. Die Ermittlung des Fahrkorridors, konkret also der Begrenzungen des Fahrkorridors, kann erfolgen, indem maximale Abweichungen von Positionen einzelner Fahrzeuge vom Fahrspurverlauf herangezogen werden sowie entsprechend die Breite des Fahrzeugs, es ist jedoch auch denkbar, dass über statistisch definierte Abweichungen gearbeitet wird.

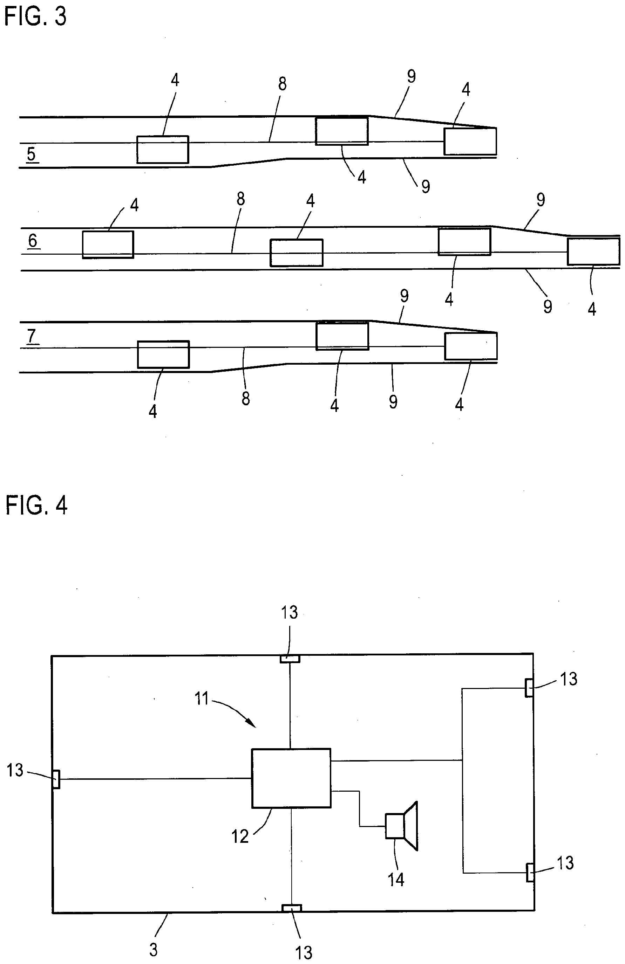

Fig. 3 erläutert dies genauer. Dort sind das eigene Kraftfahrzeug 3 sowie weitere Fahrzeuge 4 auf drei Fahrspuren 5, 6, 7 einer Straße gezeigt. Die Fahrzeuge 4 einer Fahrspur bilden mithin jeweils Kolonnen, deren Verlauf statistisch durch die Kolonnenspur, also die in den Kolonneninformation ermittelten Fahrspurverläufe 8, diesen zugeordnete Geschwindigkeits- und Beschleunigungsverläufe sowie die Begrenzungen 9 der Fahrkorridore beschrieben werden.

In einem Schritt S2 wird die Kolonneninformation nun bei der Ermittlung von Längs- und Querführungseingriffen des Fahrzeugsystems verwendet, wobei gegebenenfalls auch weitere Daten 10, insbesondere Fahrzeuginformationen eines unmittelbar voranfahrenden Fahrzeugs, berücksichtigt werden können. Konkret bildet der Fahrspurverlauf 8 der eigenen Fahrspur 6 die Solltrajektorie für die Querführung, wobei die Begrenzungen 9 des Fahrkorridors der Fahrspur 6 maximal zulässige Querpositionen des Kraftfahrzeugs 3 definieren können; hierfür können auch die Begrenzungen 9 der Fahrkorridore benachbarter Fahrspuren 5, 7, die zur Fahrspur 6 hingewandt sind, verwendet werden. Auch eine stufenweise Nutzung der Begrenzungen vom Fahrspurverlauf 8 der eigenen Fahrspur 6 weg kann vorgesehen sein, beispielsweise indem zunächst erreichte Querpositionen zwischen den Begrenzungen 9 des Fahrkorridors der eigenen Fahrspur 6 und den Begrenzungen 9 der Fahrkorridore der benachbarten Fahrspuren 5, 7 schlechter bewertet werden, wobei erst die letztgenannten Begrenzungen 9 der Fahrspuren 5, 7, die zur Fahrspur 6 hingewandt sind, endgültige Sperrbereiche bilden.

Im Hinblick auf die Längsführung bilden das Geschwindigkeits- und Beschleunigungsprofil der Kolonneninformation der eigenen Fahrspur 6 das Soll-Langzeitverhalten, welches, ebenso wie bei der Querführung, selbstverständlich bei Bedarf und wenn dies der Sicherheit zuträglich ist, noch modifiziert werden kann. Modifikationen in der Querführung, also die Abweichung von dem Fahrspurverlauf 8 der eigenen Fahrspur 6, können beispielsweise bei einem deutlich erkannten Ausweichmanöver des voranfahrenden Fahrzeugs, erkannten Hindernissen auf der Fahrbahn und dergleichen vorgenommen werden; ein starkes Bremsen des voranfahrenden Fahrzeugs kann trotz des gegebenenfalls abweichenden Geschwindigkeits- und Beschleunigungsprofils zu einem starken Bremsen des eigenen Kraftfahrzeugs 3 führen.

Nützlich bei der Längsführung eingesetzt werden können auch die bereits erwähnten Spurwechslerdaten. Liegt ein Einscherer auf die Fahrspur 6 des eigenen Kraftfahrzeugs 3 vor, spricht dies für resultierend auftretende Bremsvorgänge; liegt ein Ausscherer auf der Fahrspur 6 vor, kann ein Freiraum entstehen, der für zumindest kurzfristige Beschleunigungsmanöver sorgt. Nachdem die Position des Spurwechslers bekannt ist, lässt sich die Längsführung entsprechend hierauf abstimmen.

In einem Schritt S3 werden schließlich die ermittelten Längs- und Querführungseingriffe realisiert.

Fig. 4 zeigt eine Prinzipskizze des erfindungsgemäßen Kraftfahrzeugs 3. Dieses umfasst ein zur wenigstens teilweise automatischen Fahrzeugführung ausgebildetes Fahrzeugsystem 11, welches ein Steuergerät 12 aufweist, das zur Durchführung des erfindungsgemäßen Verfahrens ausgebildet ist. Über ein Bussystem des Kraftfahrzeugs 3, beispielsweise ein CAN-Bus oder ein Flexray-Bus, ist das Steuergerät 12 mit Quellen für Umfelddaten verbunden, welche beispielsweise von Umfeldsensoren 13, 14 geliefert werden können. Dabei handelt es sich bei den Umfeldsensoren 13 um Radarsensoren, die zur Erfassung auch verdeckter Objekte durch Mehrfachreflexionen angeordnet sind. Bei dem Umfeldsensor 14 kann es sich beispielsweise um eine Kamera handeln. Zwar sind die dargestellten Umfeldsensoren 13, 14 grundsätzlich bereits ausreichend, um die für die Ermittlung der Kolonneninformation benötigten Umfelddaten zu ermitteln, es ist jedoch auch denkbar, dass ferner eine hier nicht näher dargestellte Kommunikationseinrichtung der Kraftfahrzeug-zu-Kraftfahrzeug-Kommunikation zur Bereitstellung von Umfelddaten genutzt wird. Im Steuergerät 12 oder einem weiteren, hier nicht näher gezeigten Steuergerät können die Umfelddaten auch zu einem Umfeldmodell aufbereitet werden, das vom Steuergerät 12 genutzt wird, um die Kolonneninformation zu ermitteln.

Die unter Berücksichtigung der Kolonneninformation bestimmten Längs- und Querführungseingriffe können umgesetzt werden, indem das Steuergerät 12 geeignete Steuerinformationen über das Bussystem an die entsprechenden Aktoren, mithin insbesondere ein Brems-, Motor- und Lenksystem des Kraftfahrzeugs 3 überträgt.

## Patentansprüche

1. Verfahren zum Betrieb eines zur wenigstens teilweise automatischen Fahrzeugführung ausgebildeten Fahrzeugsystems (11) eines Kraftfahrzeugs (3), wobei wenigstens ein Längsführungseingriff und/oder wenigstens ein Querführungseingriff unter Berücksichtigung von die Umgebung des Kraftfahrzeugs (3) beschreibenden Umfelddaten des Kraftfahrzeugs (3) ermittelt werden,
wobei durch Auswertung der Umfelddaten eine das Quer- und/oder Längsverhalten einer dem Kraftfahrzeug (3) vorausfahrenden, wenigstens zwei Fahrzeuge (4) umfassenden Kolonne statistisch beschreibende Kolonneninformation ermittelt wird, wobei die Ermittlung des wenigstens einen Querführungseingriffs und/oder des wenigstens einen Längsführungseingriffs unter Berücksichtigung der Kolonneninformation erfolgt, wobei ein ortsbezogenes Geschwindigkeitsprofil und/oder ein ortsbezogenes Beschleunigungsprofil entlang der Kolonne ermittelt wird, welches entlang eines ermittelten Fahrspurverlaufs (8) oder anhand eines Abstandes zum eigenen Kraftfahrzeug (3) parametrisiert ist, wobei der Geschwindigkeitsverlauf bzw. der Beschleunigungsverlauf aus den Geschwindigkeiten bzw. Beschleunigungen der Fahrzeuge (4) der Kolonne an den Positionen des Fahrspurverlaufs (8) und/oder bei den einzelnen Abständen ermittelt wird.

2. Verfahren nach Anspruch 1,
**dadurch gekennzeichnet,**
**dass** als Kolonneninformation der zukünftiger Fahrspurverlauf (8) aus einem zeitlichen Verlauf (1) der Positionen der Fahrzeuge (4) der Kolonne ermittelt wird.

3. Verfahren nach Anspruch 2,
**dadurch gekennzeichnet,**
**dass**, wenn zu einem Abschnitt des Fahrspurverlaufs (8) Positionen mehrerer Fahrzeuge (4) der Kolonne vorliegen, diese gegeneinander plausibilisiert werden und/oder statistisch zu einem gemeinsamen Positionsverlauf verarbeitet werden.

4. Verfahren nach Anspruch 3,
**dadurch gekennzeichnet,**
**dass** bei zu stark voneinander abweichenden Positionen unterschiedlicher Fahrzeuge (4) in dem Abschnitt die neuesten aufgenommenen Positionen und/oder bei mehr als zwei Fahrzeugen (4) der von den meisten Fahrzeugen (4) gewählte Positionsverlauf (1) für die Bestimmung des Fahrspurverlaufs (8) verwendet wird.

5. Verfahren nach einem der Ansprüche 2 bis 4,
**dadurch gekennzeichnet,**
**dass** der Fahrspurverlauf (8) als Solltrajektorie bei der Ermittlung wenigstens eines Querführungseingriffes verwendet wird.

6. Verfahren nach einem der Ansprüche 2 bis 5,
**dadurch gekennzeichnet,**
**dass** zu dem Fahrspurverlauf (8) aufgrund einer angenommenen und/oder in den Umfelddaten enthaltenen Breite der Fahrzeuge (4) der Kolonne ein erlaubter Fahrkorridor ermittelt wird.

7. Verfahren nach Anspruch 6,
**dadurch gekennzeichnet,**
**dass** der Fahrkorridor aus den Positionsverläufen (1) und Breiten aller einzelnen Fahrzeuge (4) ermittelt wird, wobei immer die am weitesten außen liegende Randposition der Randpositionen aller Fahrzeuge (4) als Begrenzung (9) des Fahrkorridors bestimmt wird.

8. Verfahren nach Anspruch 6 oder 7,
**dadurch gekennzeichnet,**
**dass** die Begrenzungen (9) des Fahrkorridors als Grenzen möglicher Querpositionen des eigenen Kraftfahrzeugs (3) bei der Ermittlung des wenigstens einen Querführungseingriffs verwendet werden.

9. Verfahren nach Anspruch 6 oder 7,
**dadurch gekennzeichnet,**
**dass** eine Kolonneninformation und ein Fahrkorridor auch für wenigstens eine der aktuellen Fahrspur (6) des Kraftfahrzeugs (3) benachbarte Fahrspur (5, 7) ermittelt werden, wobei die nächstgelegenen Begrenzungen (9) der Fahrkorridore der benachbarten Fahrspuren (5, 7) als Grenzen möglicher Querpositionen des eigenen Kraftfahrzeugs (3) bei der Ermittlung des wenigstens einen Querführungseingriffs verwendet werden.

10. Verfahren nach einem der vorangehenden Ansprüche,
**dadurch gekennzeichnet,**
**dass** das Geschwindigkeitsprofil und/oder das Beschleunigungsprofil bei der Ermittlung des wenigstens einen Längsführungseingriffs berücksichtigt werden, insbesondere zusätzlich zu berücksichtigten Zustandsgrößen eines Folgeobjekts und/oder im Rahmen einer vorausschauenden Regelung.

11. Verfahren nach einem der vorangehenden Ansprüche,
**dadurch gekennzeichnet,**
**dass** die Kolonneninformation ein aus der Kolonne ausscherendes und/oder ein in die Kolonne einscherendes Fahrzeug beschreibende Spurwechslerdaten umfasst, die bei der Ermittlung des wenigstens einen Längsführungseingriffes berücksichtigt werden.

12. Verfahren nach einem der vorangehenden Ansprüche,
**dadurch gekennzeichnet,**
**dass** die Kolonneninformation unter Verwendung eines detektierte Objekte in der Umgebung des Kraftfahrzeugs (3) mit zugeordneten Attributen umfassenden Umfeldmodells ermittelt werden.

13. Verfahren nach einem der vorangehenden Ansprüche,
**dadurch gekennzeichnet,**
**dass** zu einer gemeinsamen Kolonne gehörende Fahrzeuge (4) anhand eines Vergleichs ihrer Positionsverläufe (1) identifiziert werden.

14. Verfahren nach einem der vorangehenden Ansprüche,
**dadurch gekennzeichnet,**
**dass** neben der Kolonneninformation auch eine auf ein unmittelbar vorausfahrendes Fahrzeug (4) bezogene Fahrzeuginformation bei der Ermittlung des wenigstens einen Querführungseingriffs und/oder des wenigstens einen Längsführungseingriffs berücksichtigt wird.

15. Kraftfahrzeug (3), umfassend ein zur wenigstens teilweise automatischen Fahrzeugführung ausgebildetes Fahrzeugsystem (11) mit einem zur Durchführung eines Verfahrens nach einem der vorangehenden Ansprüche ausgebildeten Steuergerät (12).

## Claims

1. Method for operating a vehicle system (11) of a motor vehicle (3) configured for at least partially automated vehicle guidance, wherein at least one longitudinal guide operation and/or at least one transversal guide operation are determined in consideration of environmental data of the motor vehicle (3) describing the environment of the motor vehicle (3)
wherein
by evaluating the environmental data, a convoy information item statistically describing the transversal and/or longitudinal behaviour of a convoy comprising at least two vehicles (4) travelling ahead of the motor vehicle (3) is determined wherein the determination of the at least one transversal guide operation and/or the at least one longitudinal guide operation is carried out in consideration of the convoy information item, wherein a location-based speed profile and/or a location-based acceleration profile is determined along the convoy which is parameterised along a determined lane course (8) or based on a distance to the motor vehicle (3) itself, wherein the speed course or the acceleration course is determined from the speeds or accelerations of the vehicles (4) of the convoy to the positions of the lane course (8) and/or for the individual distances.

2. Method according to claim 1,
**characterised in that**
the future lane course (8) is determined from a time course (1) of the positions of the vehicles (4) of the convoy as the convoy information item.

3. Method according to claim 2,
**characterised in that**
when positions of a plurality of vehicles (4) of the convoy are present at one section of the lane course (8), they are verified against each other and/or are statistically processed to a common position course.

4. Method according to claim 3,
**characterised in that**
in the case of positions of different vehicles (4) strongly deviating from each other in the section, the most recent recorded positions is used and/or in the case of more than two vehicles (4), the position course (1) selected by the majority of the vehicles (4) is used for the determination of the lane course (8).

5. Method according to any one of claims 2 to 4,
**characterised in that**
the lane course (8) is used as the target trajectory when determining at least one transversal guide operation.

6. Method according to any one of claims 2 to 5,
**characterised in that**
a permitted travel corridor is determined for the lane course (8) based on a width of the vehicles (4) of the convoy assumed and/or contained in the environmental data.

7. Method according to claim 6,
**characterised in that**
the travel corridor is determined from the position courses (1) and widths of all individual vehicles (4) wherein the outermost edge position of the edge positions of all vehicles (4) is always determined as the delimitation (9) of the travel corridor.

8. Method according to claim 6 or 7,
**characterised in that**
the delimitations (9) of the travel corridor are used as the limits of possible transversal positions of the motor vehicle (3) itself when determining the at least one transversal guide operation.

9. Method according to claim 6 or 7,
**characterised in that**
a convoy information item and a travel corridor are also determined for at least one lane (5, 7) adjacent to the current lane (6) of the motor vehicle (3) wherein the nearest delimitations (9) of the travel corridors of the adjacent lanes (5, 7) are used as the limits of possible transversal positions of the motor vehicle (3) itself when determining the at least one transversal guide operation.

10. Method according to any one of the preceding claims,
**characterised in that**
the speed profile and/or the acceleration profile are considered when determining the at least one longitudinal guide operation, in particular in addition to considered state variables of a subsequent object and/or in the context of a predictive control system.

11. Method according to any one of the preceding claims,
**characterised in that**
the convoy information item comprises lane change data describing a vehicle moving out of the convoy and/or moving into the convoy which are considered when determining the at least one longitudinal guide operation.

12. Method according to any one of the preceding claims,
**characterised in that**
the convoy information item is determined using an environmental model comprising detected objects in the environment of the motor vehicle (3) with assigned attributes.

13. Method according to any one of the preceding claims,
**characterised in that**
vehicles (4) belonging to a common convoy are identified based on a comparison of their position courses (1).

14. Method according to any one of the preceding claims,
**characterised in that**
in addition to the convoy information item, a vehicle information item based on a vehicle (4) travelling directly ahead is considered when determining the at least one transversal guide operation and/or the at least one longitudinal guide operation.

15. Vehicle (3), comprising a vehicle system (11) configured for at least partially automated vehicle guidance using a control device (12) configured to carry out a method according to any one of the preceding claims.

## Revendications

1. Procédé de fonctionnement d'un système de véhicule (11), conçu pour la conduite au moins partiellement automatique de véhicule, d'un véhicule automobile (3),
dans lequel on détermine au moins une intervention de conduite longitudinale et/ou au moins une intervention de conduite transversale en tenant compte de données d'environnement du véhicule automobile (3) qui décrivent l'environnement du véhicule automobile (3),
dans lequel,
en évaluant les données d'environnement, on détermine une information de file qui décrit statistiquement le comportement transversal et/ou longitudinal d'une file de véhicules qui précède le véhicule automobile (3) et qui comprend au moins deux véhicules (4),
dans lequel la détermination de l'au moins une intervention de conduite transversale et/ou de l'au moins une intervention de conduite longitudinale s'effectue en tenant compte de l'information de file,
dans lequel on détermine un profil de vitesse lié à la position et/ou un profil d'accélération lié à la position le long de la file, lequel profil est paramétré le long d'une allure de voie de circulation (8) déterminée ou à l'aide d'une distance au véhicule automobile (3) considéré,
et dans lequel on détermine la courbe de vitesse ou la courbe d'accélération à partir des vitesses ou des accélérations des véhicules (4) de la file au niveau des positions de l'allure de voie de circulation (8) et/ou pour les distances individuelles.

2. Procédé selon la revendication 1,
**caractérisé en ce que**,
comme information de file, on détermine l'allure de voie de circulation à venir (8) à partir d'une allure temporelle (1) des positions des véhicules (4) de la file.

3. Procédé selon la revendication 2,
**caractérisé en ce que**,
s'il existe pour un tronçon de l'allure de voie de circulation (8) des positions de plusieurs véhicules (4) de la file, on effectue un contrôle de vraisemblance les concernant et/ou on les traite statistiquement afin d'obtenir une allure de position commune.

4. Procédé selon la revendication 3,
**caractérisé en ce que**,
en présence de positions de différents véhicules (4) s'écartant trop les unes des autres dans le tronçon, on utilise les positions enregistrées les plus récentes et/ou, en présence de plus de deux véhicules (4), on utilise l'allure de position (1) choisie par la plupart des véhicules (4) pour la détermination de l'allure de voie de circulation (8).

5. Procédé selon l'une des revendications 2 à 4,
**caractérisé en ce**
**qu'**on utilise l'allure de voie de circulation (8) comme trajectoire théorique lors de la détermination d'au moins une intervention de conduite transversale.

6. Procédé selon l'une des revendications 2 à 5,
**caractérisé en ce que**,
pour l'allure de voie de circulation (8), on détermine sur la base d'une largeur supposée des véhicules (4) de la file et/ou d'une largeur contenue dans les données d'environnement desdits véhicules un couloir de circulation autorisé.

7. Procédé selon la revendication 6,
**caractérisé en ce**
**qu'**on détermine le couloir de circulation à partir des allures de positions (1) et des largeurs de tous les véhicules (4) individuels, la position marginale la plus à l'extérieur parmi les positions marginales de tous les véhicules (4) étant déterminée comme limite (9) du couloir de circulation.

8. Procédé selon la revendication 6 ou 7,
**caractérisé en ce**
**qu'**on utilise les limites (9) du couloir de circulation comme limites de positions transversales possibles du véhicule automobile (3) individuelle lors de la détermination de l'au moins une intervention de conduite transversale.

9. Procédé selon la revendication 6 ou 7,
**caractérisé en ce**
**qu'**on détermine aussi une information de file et un couloir de circulation pour au moins une voie de circulation (5, 7) voisine de la voie de circulation (6) actuelle du véhicule automobile (3), les plus proches limites (9) des couloirs de circulation des voies de circulation (5, 7) voisines étant utilisées comme limites de positions transversales possibles du véhicule automobile (3) considéré lors de la détermination de l'au moins une intervention de conduite transversale.

10. Procédé selon l'une des revendications précédentes,
**caractérisé en ce**
**qu'**on prend en compte le profil de vitesse et/ou le profil d'accélération lors de la détermination de l'au moins une intervention de conduite longitudinale, en particulier en plus de grandeurs d'état à prendre en compte d'un objet de poursuite et/ou dans le cadre d'une régulation prévisionnelle.

11. Procédé selon l'une des revendications précédentes,
**caractérisé en ce que**
l'information de file comprend des données de changement de voie qui décrivent un véhicule sortant de la file et/ou un véhicule entrant dans la file et qui sont prises en compte lors de la détermination de l'au moins une intervention de conduite longitudinale.

12. Procédé selon l'une des revendications précédentes,
**caractérisé en ce**
**qu'**on détermine l'information de file en utilisant un modèle d'environnement comprenant des objets détectés dans l'environnement du véhicule automobile (3) avec des attributs associés.

13. Procédé selon l'une des revendications précédentes,
**caractérisé en ce**
**qu'**on identifie des véhicules (4) appartenant à une file commune à l'aide d'une comparaison de leurs allures de position (1).

14. Procédé selon l'une des revendications précédentes,
**caractérisé en ce que**,
outre l'information de file, on prend aussi en compte une information de véhicule se rapportant à un véhicule (4) qui circule juste devant lors de la détermination de l'au moins une intervention de conduite transversale et/ou de l'au moins une intervention de conduite longitudinale.

15. Véhicule automobile (3), comprenant un système de véhicule (11) conçu pour la conduite au moins partiellement automatique de véhicule, avec un appareil de commande (12) conçu pour la mise en oeuvre d'un procédé selon l'une des revendications précédentes.
